Europäisches Patentamt

European Patent Office

Office européen des brevets

(11) Publication number: **0 261 458 B1**

# EUROPEAN PATENT SPECIFICATION

(45) Date of publication of patent specification: **08.04.92**  (51) Int. Cl.⁵: **B01J  20/04**, B01D 15/08

(21) Application number: **87112756.9**

(22) Date of filing: **01.09.87**

(54) Assemblage of hydroxyl apatite particles and liquid chromatography column containing the same.

(30) Priority: **02.09.86 JP 206425/86**

(43) Date of publication of application:
**30.03.88 Bulletin  88/13**

(45) Publication of the grant of the patent:
**08.04.92 Bulletin  92/15**

(84) Designated Contracting States:
**DE FR GB SE**

(56) References cited:
**EP-A- 216 621**
**EP-A- 217 614**
**EP-A- 0 026 090**
**EP-A- 0 205 622**

**PATENT ABSTRACTS OF JAPAN, vol. 10, no.
53 (P-433)[2110], 4th March 1986; & JP-A-60
198 458 (KOUKEN K.K.) 07-10-1985**

(73) Proprietor: **TOA NENRYO KOGYO KABUSHIKI
KAISHA
1-1 Hitotsubashi, 1-Chome Chiyoda-Ku
Tokyo 100(JP)**

(72) Inventor: **Tagaya, Nobuaki
2734-4, Oaza Kasahata
Kawagoe-shi Saitama(JP)**
Inventor: **Yamada, Toshihiro
941-13, Kamekubo Ooimachi
Iruma-gun Saitama(JP)**
Inventor: **Miyasaka, Kenji
4-3-344, Nishitsurugaoka 1-chome
Ooimachi Iruma-gun Saitama(JP)**
Inventor: **Maeshima, Tsugio
1428-34, Suneori Tsurugashima-cho
Iruma-gun Saitama(JP)**

(74) Representative: **Kinzebach, Werner, Dr.
Patentanwälte Reitstötter, Kinzebach und
Partner Sternwartstrasse 4 Postfach 86 06 49
W-8000 München 86(DE)**

**Description**

BACKGROUND OF THE INVENTION

I. Field of the Invention

This invention relates to a novel assemblage of hydroxyl apatite secondary particles and its use as a packing of a liquid chromatography column.

II. Description of the Prior Art

Hydroxyl apatite is now widely used as packings of liquid chromatography columns for separating biological macromolecules such as proteins and nucleic acids. The conventional hydroxyl apatite packings for liquid chromatography are manufactured by finely pulverizing plate-shaped crystals of hydroxyl apatite which is usually manufactured by a so called hydrothermal synthesis process in which calcium hydrogenphosphate is hydrolyzed at, for example, 200°C and under a pressure of, for example, 15 atms.

The particle size of the conventional assemblage of hydroxyl apatite particles used for liquid chromatography column packing is not very uniform, and the separation efficiency of the liquid chromatography is not satisfactory. Further, since the crystals of the hydroxyl apatite particles have a plate-like shape, the efficiency of the chromatography varies depending on the packing method of the hydroxyl apatite particles and on the operation parameters of the liquid chromatography. Further, while hydroxyl apatite particle of small size should be used to promote the separation efficiency, the smaller the particle size, the greater the flow resistance of the packing. Thus, to separate a considerable amount of a substance in a commercial scale, the separation process is slow or very high pressure is needed to be applied to the column.

EP-A-216 621 and EP-A-217 614 describe uniform hydroxyl apatite particles of spherical shape, manufactured by a spray drying method.

SUMMARY OF THE INVENTION

Accordingly, the object of the present invention is to provide a novel assemblage of hydroxyl apatite particles having a use as a packing of a liquid chromatography column with a high separation efficiency even in the absence of pressure applied to the column.

This and other objects of the present invention may be accomplished by the present invention which provides an assemblage of hydroxyl apatite secondary particles of substantially spherical shape having a pore volume of 0.3 ml/g to 0.8 ml/g, each of the secondary particles consisting essentially of substantially needle-shaped, pillar-shaped or rice grain-shaped hydroxyl aparite crystals having a maximum diameter of the cross-section perpendicular to the longitudinal axis of the crystal of 10 nm to 50 nm, and a length of the longitudinal axis of 50 nm to 500 nm, the median of the particle size of the secondary particles being 10 $\mu$m to 100 $\mu$m, and the percentage of the secondary particles having a particle size which is at least three times longer than the median of the particles is not more than 10%.

This invention further provides a liquid chromatography column comprising a hollow tube, a packing contained in the tube, which essentially consists of the assemblage of the present invention, and a filter mounted on the lower portion of the tube, the pore size of the filter being smaller than the hydroxyl apatite particles constituting the packing.

By the present invention, a novel assemblage of hydroxyl apatite secondary particles, which is suited for a packing of a liquid chromatography, is provided. Since the secondary prticles consist essentially of needle-sheped, pillar-shaped or rice grain-shaped hydroxyl apatite particles, they necessarily contain a great number of pores therein. When the secondary particles are used as a packing of a liquid chromatography column, the separation efficiency is influenced by the pore radius and the pore volume of the pores in the secondary particles. When the size of the hydroxyl apatite particles constituting the secondary particles, and the particle size of the secondary particles are within the range of the present invention, the optimum pore radius and the pore v olume may be obtained. Because of the pores in the secondary particles, the assemblage of the hydroxyl apatite secondary particles of the present invention has a high separation efficiency. In spite of the high separation efficiency, since the particle size of the secondary particles is relatively large, the flow resistance is small, so that liquid chromatography can be conducted quickly with a high separation efficiency without applying a pressure to the column in a commercial scale. Thus, the assemblage of hydroxyl apatite secondary particles of the present invention is

EP 0 261 458 B1

especially suited for a packing of a liquid chromatography column for separation of substances in a commercial scale.

BRIEF DESCRIPTION OF THE DRAWINGS

Fig. 1 is a schematic view of the secondary particle constituting the assemblage of the present invention;

Fig. 2 is a schematic sectional view of the liquid chromatography column of the present invention.

Figs. 3 to 9 are histograms showing the particle size of the secondary particles constituting the assemblage of the present invention, which were obtained in the Examples of the present invention.

DETAILED DESCRIPTION OF THE PREFERRED EMBODIMENTS

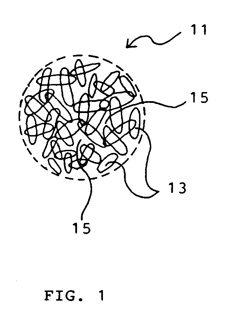

A schematic view of the hydroxyl apatite secondary particle is shown in Fig. 1. The hydroxyl apatite secondary particle 11 constituting the assemblage of the present invention is of substantially spherical shape and consists essentially of substantially needle-shaped, pillar-shaped or rice grain-shaped hydroxyl apatite crystals 13. The particle consisting essentially of the hydroxyl apatite crystals is termed "secondary particle" since it consists essentially of hydroxyl apatite crystal particles. The hydroxyl apatite crystals have a maximum diameter of the cross-section perpendicular to the longitudinal axis thereof of 10 nm to 50 nm, and a length of the longitudinal axis of 50 nm to 500 nm. Since the secondary particle consists essentially of the substantially needle-shepaed, pillar-shepaed or rice grain-shaped hydroxyl apatite crystals, it necessarily contains a number of pores 15. The pores have a pore radius of about 10 nm to 100 nm and pore volume of about 0.3 ml/g to 0.8 ml/g, as determined by a mercury porosimeter. Due to the pores 15, the assemblage of the secondary particles of the present invention has a high separation efficiency when it is used as a packing of a liquid chromatography column. If the pore volume is less than about 0.3 ml/g, it is difficult to obtain a high separation efficiency. If the pore volume is more than about 0.8 ml/g, the mechanical strength of the particles is reduced, so that some of the particles may be broken in a chromatography column to increase the flow resistance. If the pore radius is not within the above-mentioned range, it is difficult to obtain a high separation efficiency. It should be noted that in Fig. 1, the crystals 13 are shown much larger than the actual size relative to the particle size of the secondary particle 11 for the purpose of easier comprehension of the structural feature of the secondary particle.

The assemblage of the present invention consists essentially of the above-described secondary particles. The median of the particle size (diameter) of the secondary particles constituting the assemblage of the present invention is 10 $\mu$m to 100 $\mu$m, preferably 10 $\mu$m to 50 $\mu$m based on the area thereof, and not less than 90% of the secondary particles have a particle size of not more than 300 $\mu$m. It is preferred that the particle size of the secondary particles be as uniform as possible, and so it is preferred that the percentage of the secondary particles having a particle size which is not less than three times larger than the median of the particle size is not more than 10%.

The assemblage of hydroxyl apatite secondary particles of the present invention may be produced as follows:

First of all, a slurry or sus pension of the hydroxyl apatite crystals having above-described shape and size is produced. The slurry may be obtained by adding an equivalent amount of phosphoric acid to an aqueous suspension of calcium hydroxide and reacting these substances at a temperature from room temperature to about 150°C under atmospheric pressure. The concentrations of the calcium hydroxide and the phosphoric acid are set such that the slurry has a hydroxyl apatite concentration of 1 to 50% by weight, preferably 2 to 30% by weight. The medium of the slurry may be water and may contain an additive such as a dispersant.

The thus obtained hydroxyl apatite slurry is then sprayed into an air flow having a temperature of about 180°C to 260°C (temperature at the inlet of a spray-drying apparatus). This may be conducted by using a commercially available spray-drying apparatus with a disk nozzle. The revolution of the disk may be from 2,000 rpm to 30,000 rpm. The particle size of the secondary particles may be controlled by controlling the revolution of the disk nozzle. The processing rate is not limited and may be 0.5 kg/hr. to 20 kg/hr. The sprayed hydroxyl apatite particles may be recovered under the main body of the spray-drying apparatus or in a cyclone via a duct from the portion under the main body of the spray-drying apparatus. The particle size of the particles recovered under the main body of the spray-drying apparatus is larger than those of recovered in the cyclone.

By the above-described procedure, the assemblage of hydroxyl apatite secondary particles may be obtained. If the slurry concentration, the revolution of the disk, or the temperature of the air flow in the drying room is outside the above-mentioned range, the distribution of the particle size may become large so

3

that the percentage of the particles having a particle size of not more than 300 μm may become less than 90%, or the median of the particle size may become outside of the range of the present invention.

Although the assemblage as obtained may be used as a packing of a liquid chromatography column, it is preferred that the hydroxyl apatite secondary particles as obtained be dried at 80°C to 120°C for 0.1 to 10 hours, and then sintered at 400°C to 700°C for 1 to 3 hours.

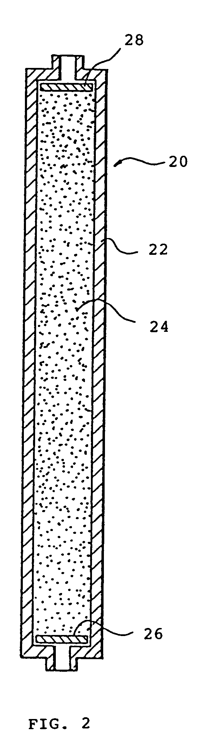

In another aspect of the present invention, the present invention provides a liquid chromatography column containing the above-described assemblage of hydroxyl apatite particles as a packing. Except that the packing is the assemblage of the present invention, the liquid chromatography column of the present invention has a structure common to conventional liquid chromatography columns. A schematic sectional view of the liquid chromatography column of the present invention is shown in Fig. 2. The column 20 of the present invention comprises a tube 22 and a packing 24 contained therein, and the packing 24 essentially consists of the above-described assemblage of the hydroxyl apatite secondary particles of the present invention. The column 20 further comprises a filter 26 at the lower portion thereof. The pore size of the filter 26 must be smaller than the particle size of the hydroxyl apatite secondary particles in the packing in order that the escape of the hydroxyl apatite secondary particles constituting the packing 24 from the tube 22 is prevented. The column 20 preferably has a similar filter 28 at the upper portion of the column 20, which also prevents the packing particles from getting out of the tube 22. Thus, the structure of the liquid chromatography column, except for the packing, is conventional.

The liquid chromatography column of the present invention has a high separation efficiency because of the pores in the secondary particles. In spite of the high separation efficiency, since the particle size of the secondary particles is relatively large, the flow resistance is small, so that liquid chromatography can be conducted quickly with a high separation efficiency without applying a pressure to the colum n in a commercial scale.

The present invention will now be described referring to the examples thereof. The examples are presented for the illustration purpose only, and should not be construed restrictively in any way.

Examples 1 - 7

A suspension of 44.4 g of Ca(OH)$_2$ in 1000 g of distilled water was placed in a 3-liter three neck flask. Under a nitrogen purge, aqueous phosphoric acid (41.4 g of 85% H$_3$PO$_4$ in 1420 g of distilled water) was added slowly to the suspension while vigorously stirring the suspension. The mixture was held at 90°C for 18 hours in an oil bath to obtain a hydroxyl apatite slurry containing white hydroxyl apatite crystals.

The concentration of the hydroxyl apatite slurry was adjusted to the value shown in the table below, and the slurry was subjected to spray-drying using a commercially available spray-drying apparatus with a disk nozzle. The secondary particles were recovered under the main body of the spray-drying apparatus and in a cyclone via a duct from the portion under the main body of the apparatus. The particles were dried at 100°C for about 3 hours to obtain an assemblage of hydroxyl apatite secondary particles of the present invention.

Observation with SEM revealed that the particles obtained were substantially spherical and consisted essentially of hydroxyl apatite crystals of substantially needle-shaped, pillar-shaped and rice grain-shaped, having the size within the range of the present invention.

The particle size distribution of the thus obtained secondary particles were determined employing a method based on the combination of the Stoke's sedimentation equation and the proportional relationship between the absorbance of a suspension and the concentration of the particles in the suspension, using an automatic particle size distribution measuring apparatus (type CAPA-300, commercially available from Horiba Seisakusho, Kyoto, Japan). The measurement was conducted employing spontaneos sedimentation of the particles and empolying the following measurement parameters.

| | |
|---|---|
| Coefficient of Viscosity of Dispersion Medium: | 3.75 centipoise |
| Density of Dispersion Medium: | 1.10 g/ml |
| Density of Samples: | 3.21 g/ml |
| Maximum Particle Size: | 100.00 μm |
| Minimum Particle Size: | 5.0 μm |
| Particle Size Interval | 5.0 μm |
| Measuring Time | 21.75 min. |

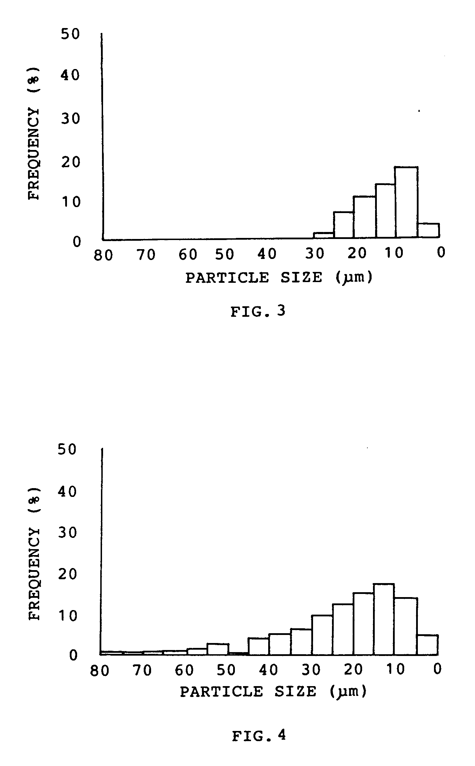

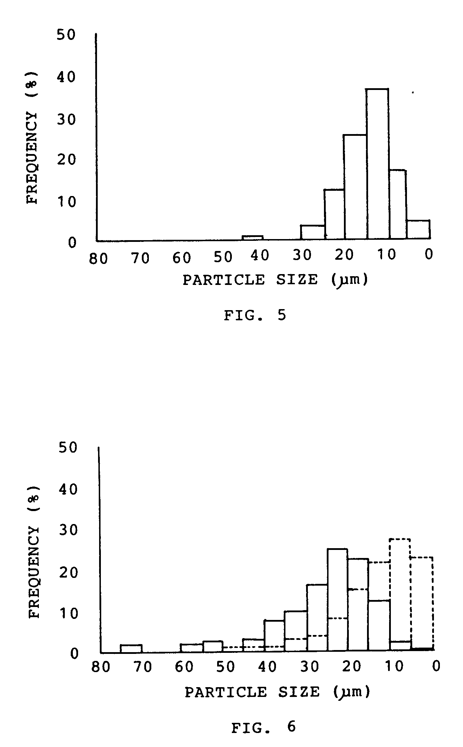

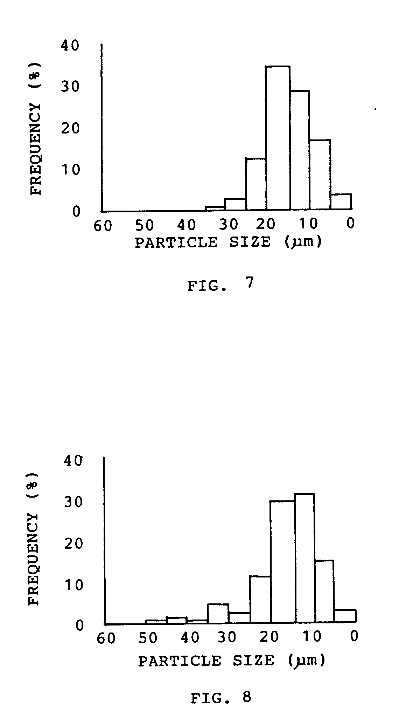

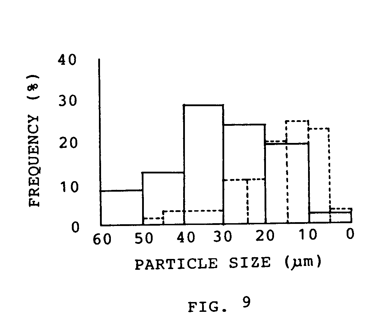

The determined particle sizes are shown in Figs. 3 to 9. In the drawings, those shown by a solid line show the results obtained for the particles recovered under the main body of the spray-drying apparatus, and those shown by a broken line show the results obtained for the particles recovered in the cyclone.

As shown in Figs. 3 to 9, by the above-described procedure, assemblages of hydroxyl apatite particles having a median of the particle size of 12 $\mu$m to 32 $\mu$m (in Examples 3, 5 and 6, they are obtained under the main body of the spray-drying apparatus) were obtained. More than 90% of the obtained particles had a particle size of not more than 50 $\mu$m. Further, in the particles obtained in the Examples, the percentage of the particles having a particle size which is not less than 3 times larger than the median of the particle size was not more than 10%.

Table 1

| Example | 1 | 2 | 3 | 4 | 5 | 6 | 7 |
|---|---|---|---|---|---|---|---|
| Slurry Concentration (wt%) | 11.2 | 11.2 | 10.6 | 10.6 | 9.84 | 5.73 | 9.84 |
| Diameter of Drying Room (cm) | 120 | 120 | 120 | 120 | 160 | 160 | 160 |
| Inlet Temperature (°C) | 229 | 227 | 260 | 260 | 230 | 230 | 230 |
| Outlet Temperature (°C) | 119 | 120 | 110 | 120 | 125-135 | 128 | 128 |
| Revolution of Disk | 16000 | 10000 | 24000 | 12000 | 16000 | 16000 | 7000 |
| Processing Rate (kg/min.) | 4 | 4 | 15 | 15 | 4 | 4 | 6 |
| Recovery (%) | 97.6 | 100 | 100 | 77.8 | 83.8 | 85.1 | 87.5 |
| (Under Main Body) | | | (37.3) | (18.5) | (26.3) | (24.3) | (58.5) |
| (Cyclone) | | | (62.7) | (59.3) | (57.5) | (60.8) | (29.0) |
| Median of Particle Size (μm) | | | | | | | |
| (Under Main Body) | 12 | 20 | 14 | 22.8 | 15.2 | 15.2 | 31.8 |
| (Cyclone) | | | 7.5 | 12.3 | 9.2 | 9.3 | 15.2 |
| Particle Size Distribution | Fig.3 | Fig.4 | Fig.5 | Fig.6 | Fig.7 | Fig.8 | Fig.9 |

Reference Examples 1 - 4

Each of the assemblages of hydroxyl apatite particles having a median of the particle size, pore volume and pore radius as shown in Table 2 below was packed in a cylinder with a inner diameter of 7.5 mm and a length of 10 cm to obtain a liquid chromatography column. The number of theoretical plates of each column was determined from the elution curve of cytochrome C, which is obtained under the following conditions:

| | |
|---|---|
| Eluent: | A. 10 mM sodium phosphate buffer, pH 6.8 |
| | B. 300 mM sodium phosphate buffer, pH 6.8 |
| Elution Condition: | linear gradient for 30 minutes from 0% to 100% of the eluent B. |
| Sample Amount: | 20 $\mu$l |
| Sample: | cytochrome C (1.7 mg/ml) |
| Flow Rate: | 1.0 ml/min. |
| Detection Wavelength: | UV 280 nm |

The number of theoretical plates is calculated, on the basis of the resolution time (tR) in chromatography and the half-width (w) of the chromatograph, from the following formula:

$$N \text{ (No. of theoretical plates)} = 16(tR/w)^2$$

As shown in Table 2, the assemblages of the present invention have an excellent number of theoretical plates.

TABLE 2

| Example | PS*1 | PV*2 | PR*3 | NTP*4 |
|---|---|---|---|---|
| 8 | 10 | 0.5 | 50 | 8000 |
| 9 | 20 | 0.4 | 45 | 4000 |
| 10 | 50 | 0.6 | 45 | 2000 |
| 11 | 80 | 0.5 | 50 | 1000 |

*1: Median of Particle Size in Terms of $\mu$m
*2: Mean Pore Volume in Terms of ml/g
*3: Mean Pore Radius in Terms of nm
*4: Number of Theoretical Plates

## Claims

1. An assemblage of hydroxyl apatite secondary particles of substantially spherical shape having a pore volume of 0.3 ml/g to 0.8 ml/g, each of the secondary particles consisting essentially of substantially needle-shaped, pillar-shaped or rice grain-shaped hydroxyl apatite crystals having a maximum diameter of the cross-section perpendicular to the longitudinal axis of the crystal of 10 nm to 50 nm, and a length of the longitudinal axis of 50 nm to 500 nm, the median of the particle size of the secondary particles being 10 $\mu$m to 100 $\mu$m, and the percentage of the secondary particles having a particle size which is at least three times larger than the median of the particles is not more than 10 %.

2. A liquid chromatography column comprising a hollow tube, a packing contained in the tube, which essentially consists of the assemblage of claim 1, and a filter mounted on the lower portion of the tube, the pore size of the filter being smaller than the hydroxyl apatite particles constituting the packing.

## Revendications

1. Un assemblage de particules secondaires d'hydroxyl apatite de forme sensiblement sphérique ayant un volume de pore de 0,3 ml/g à 0,8 ml/g, chacune des particules secondaires consistant essentiellement en des cristaux d'hydroxyl apatite en forme d'aiguille, de colonne ou de grain de riz ayant un diamètre maximum de leur section droite perpendiculaire à l'axe longitudinal du cristal de 10 nm à 50 nm et une longueur de leur axe longitudinal de 50 nm à 500 nm, la médiane de la taille de particule des particules secondaires étant de 10 $\mu$m à 100 $\mu$m et le pourcentage des particules secondaires qui ont une taille de particule au moins trois fois plus grande que la médiane des particules, n'étant pas de plus de 10 %.

2. Une colonne de chromatographie liquide comprenant un tube creux, un remplissage contenu dans le tube, qui consiste essentiellement en l'assemblage selon la revendication 1, et un filtre monté à la partie inférieure du tube, la taille de pore du filtre étant plus petite que les particules d'hydroxyl apatite constituant le remplissage.

**Patentansprüche**

1. Im wesentlichen kugelförmige Hydroxylapatitsekundär-Teilchen mit einem Porenvolumen von 0,3 ml/g bis 0,8 ml/g, wobei im wesentlichen jedes der Sekundärteilchen aus im wesentlichen nadelförmigen, säulenförmigen oder Reiskornförmigen Hydroxylapatit-Kristallen mit einem maximalen Durchmesser des Querschnittes senkrecht zur Längsachse des Kristalls von 10 nm bis 50 nm, und einer Länge der Längsachse von 50 nm bis 500 nm besteht, die mittlere Teilchengröße der Sekundärteilchen 10 $\mu$m bis 100 $\mu$m beträgt und der Prozentsatz der Sekundärteilchen mit einer Teilchengröße, die mindestens dreimal größer als der Mittelwert der Teilchen, nicht mehr als 10% ist.

2. Flüssigkeitschromatographie-Säule umfassend eine hohle Röhre, eine in der Röhre befindliche Pakkung, die im wesentlichen aus den Teilchen nach Anspruch 1 besteht, und einen an dem unteren Teil der Röhre befestigten Filter, dessen Porengröße kleiner ist als die die Packung bildenden Hydroxylapatit-Teilchen

FIG. 1

FIG. 2

FIG. 3

FIG. 4

FIG. 5

FIG. 6

FIG. 7

FIG. 8

FIG. 9